# EUROPEAN PATENT APPLICATION

(11) **EP 4 369 559 A2**
(43) Date of publication of application: **15.05.2024**
(21) Application number: 23208144.8
(22) Date of filing: 07.11.2023
(51) Int. Cl.: H02J 7/00, H02J 50/00, H02J 50/10, H02J 50/90

(54) **WIRELESS CHARGING MODULES WITH MAGNETIC RETENTION**

(30) Priority: 08.11.2022 US 202263423592 P
(71) Applicant: Molex CVS Bochum GmbH, 44807 Bochum (DE); Molex Technologies GmbH, 12529 Schönefeld (DE)
(72) Inventor: Seth, Christian, Zossen (DE); Brandt, Lukas, Zossen (DE); Reif, Reinhold, Schwaig (DE)
(74) Representative: Ter Meer Steinmeister & Partner

(57) **Abstract**

A wireless charging module includes a magnetic alignment component located higher in the Z axis than the transmitting coil, thereby enabling the magnetic alignment component to be closer to a mobile device positioned on a charging surface of the wireless charging module, which can provide better alignment between the transmitting coil of the wireless charging module and the receiving coil of the mobile device. In exemplary embodiments, the magnetic alignment component comprises a magnetic ring in a projection of a housing of the wireless charging module or embedded within a compliant/flexible cover configured to extend along a top portion of the wireless charging module. This can help ensure the magnet alignment components of the wireless charging module and the mobile device are close enough together to produce a sufficient magnetic force to pull the mobile device into proper alignment and provide superior alignment between the coils of the two devices.

## Description

This application claims priority to United States Provisional Application No. 63/423,592 filed November 8, 2022.

### TECHNICAL FIELD

This disclosure relates to the field of wireless charges in vehicles, more specifically to the use of orientation controlling features in wireless chargers.

### DESCRIPTION OF RELATED ART

Wireless charges are commonly used to charge mobile devices. When the transmitting and receiving coil are well aligned, the performance of the wireless charging system is close to the efficiency of a wired connection but avoids the hassle of needing to plug in a device and allows for a mobile device to be both wirelessly powered and wirelessly connected to the vehicle. One issue that exists is that each mobile device has its own shape (such shape being impossible to predict in advance as such shapes can change each year) and the location of a receiving coil is not uniform. Thus, it is difficult to arrange the coil of the wireless charger in a location that ensures high efficiency.

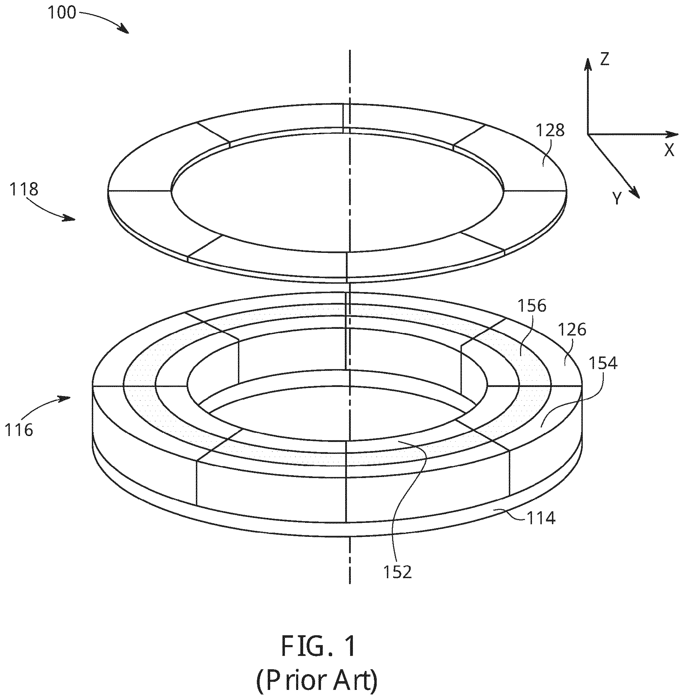

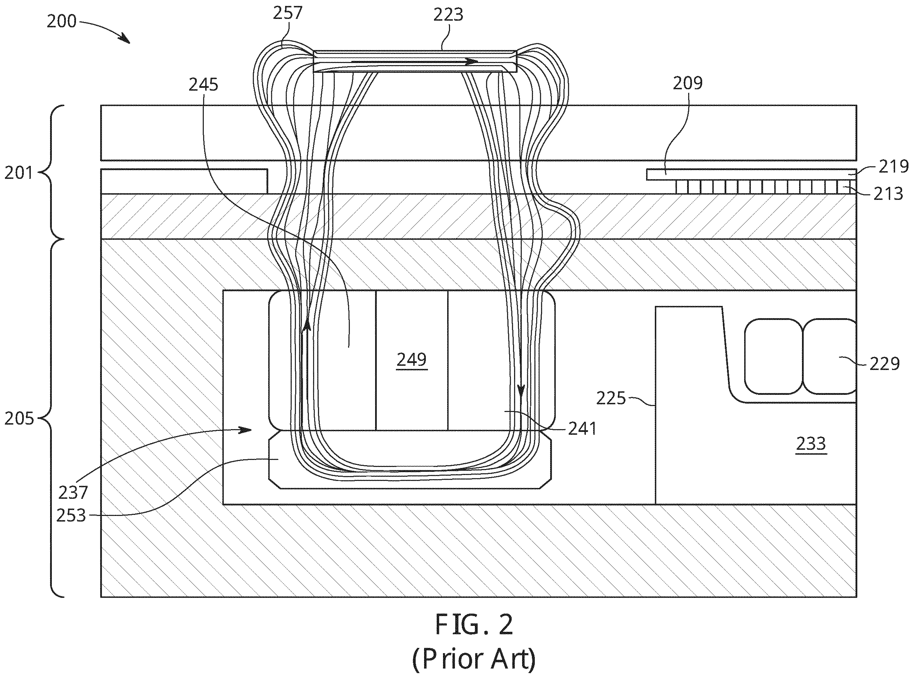

One attempt to overcome this has included adding additional coils so that one coil is always in a reasonably efficient location. Optimum efficiency, however, is not ensured with such an approach, instead such an approach can only ensure reasonable efficiency. APPLE has developed a wireless charging system known as MAGSAFE and such a system works by using two magnetic rings, one in the charger and one in the mobile device, to ensure there is a nearly ideal alignment between the transmission coil and the receiving coil (at least within the X and Y direction) and thus helps address the problem in a significant manner. FIGS. 1 and 2 illustrate how the magnetic alignment system 100 functions. In operation, two coils are positioned inside each of the magnetic rings and the magnetic attraction helps ensure the coils are aligned accurately with respect to each other with only the Z-axis alignment being uncertain (because mobile devices, for example, may have a case of varying thickness).

As shown in FIG. 1, the magnetic alignment system 100 includes primary and secondary alignment components 116, 118 respectively including primary and second magnets 126, 128. Each primary magnet 126 may include two arcuate pieces of magnetic material providing inner arcuate magnetic region 152 having a magnetic orientation in a first axial direction, an outer arcuate magnetic region 154 having a magnetic orientation in a second axial direction opposite the first direction, and a central non-magnetized region 156 that does not have a magnetic orientation. An annular shield 114 (also referred to as a DC magnetic shield or DC shield) is disposed on a distal surface of primary magnets 126.

FIG. 2 is a cross-sectional view of a system 200 including a portable electronic device 201 in alignment with a wireless charger device 205. The coil assembly 209 of the portable electronic device 201 includes an inductive receiver coil 213 and shielding 219. A secondary magnet 223 of the portable electronic device 201 forms a portion of secondary magnetic alignment and can have a magnetic field oriented in a radially inward direction (as shown by the arrow).

The wireless charger device 205 includes a transmitter coil assembly 225 including an inductive transmitter coil 229 and electromagnetic shielding 233. Primary magnet 237 forms a portion of primary magnetic alignment component and can include an inner arcuate region 241 having a magnetic field oriented in a first axial direction, an outer arcuate region 245 having a magnetic field oriented in a second axial direction opposite the first axial direction, and a non-magnetized central arcuate region 249. A DC shield 253 can be disposed on the distal surface of primary magnet 237.

When aligned, primary magnet 237 and secondary magnet 223 produce a closed-loop magnetic flux as shown by lines 257. Magnetic flux 257 can attract primary annular alignment component and secondary annular alignment component into alignment such that the respective centers of primary annular alignment component and secondary annular alignment component are aligned along a common axis. Since transmitter coil 229 is fixed in a position concentric with primary alignment component and receiver coil 213 is fixed in position concentric with secondary alignment component, a result of aligning primary annular alignment component and secondary annular alignment component along a common axis is that transmitter coil 229 and receiver coil 213 are also aligned along a common axis, thereby enabling efficient wireless power transfer.

In a vehicle application, however, the current designs may not be suitable in all cases. Accordingly, certain individuals would appreciate further improvements in automotive wireless charging systems.

### SUMMARY

This section provides a general summary of the disclosure and is not a comprehensive disclosure of its full scope or all of its features.

The object is the present disclosure to provide an improvements of an automotive wireless charging system.

The object is solved by the features of the independent claims. Preferred embodiments are given in the dependent claims.

A wireless charging module includes a magnetic alignment component (*e.g.,* magnetic ring, *etc.)* that is located higher in the Z axis than the transmitter coil of the wireless charging module. This enables the magnetic alignment component of the wireless charging module to be closer to a complementary magnetic alignment component of a mobile device positioned on a charging surface of the wireless charging module, which can provide better alignment between the wireless charging module's transmitter coil and the mobile device's receiver coil for an efficient power transfer.

In an exemplary embodiment, the magnetic alignment component comprises a magnetic ring provided in a projection in a housing of the wireless charging module. In another exemplary embodiment, the magnetic alignment component comprises a magnetic ring embedded within a compliant/flexible cover that is configured to extend along a portion of the top surface of the wireless charging module. Such exemplary embodiments can help ensure the magnet alignment components of the wireless charging module and the mobile device are close enough together to produce a sufficient magnetic force to pull the mobile device into proper alignment and thus provide superior alignment between the transmitter and receiver coils of the two devices without requiring the use of stronger magnets.

In an aspect of the disclosure a wireless charging module is provided comprising: a housing that defines an enclosure, the housing having a first surface that substantially defines a top side of the housing; a transmitting coil within the housing, the transmitting coil configured to be operable for transferring power wirelessly through a charging surface of the wireless charging module; and a magnetic alignment component configured to magnetically couple with a complementary magnetic alignment component of a mobile device for aligning the mobile device on the charging surface of the wireless charging module, wherein the magnetic alignment component of the wireless charging module is positioned above the first surface of the housing of the wireless charging module such that the magnetic alignment component of the wireless charging module is located higher in the Z axis than the transmitting coil.

IN the following optional features are provided to further improve the disclosure. Th optional features can be combined with the above mentioned aspects of the disclosure alone or in combination or in sub combination.

In one or more embodiments, the magnetic alignment component of the wireless charging module may be substantially concentric with the transmitting coil.

In one or more embodiments, the positioning of magnetic alignment component above the first surface of the housing and higher in the Z axis than the transmitting coil may enable the magnetic alignment component to be closer to the complementary magnetic alignment component of the mobile device when the mobile device is positioned on the charging surface of the wireless charging module.

In one or more embodiments, the positioning of magnetic alignment component above the first surface of the housing and higher in the Z axis than the transmitting coil may help ensure that the magnetic alignment component and the complementary magnetic alignment component of the mobile device are close enough together when the mobile device is positioned on the charging surface of the wireless charging module to produce a sufficient magnetic force to pull the mobile device along the charging surface to properly align a receiving coil of the mobile device with the transmitting coil without requiring use of stronger magnets.

In one or more embodiments, the housing may include a projection that extends upward from the first surface of the housing,

In one or more embodiments, the magnetic alignment component may be positioned in the projection of the housing.

In one or more embodiments, the wireless charging module may comprise a compliant and/or flexible cover positioned along the first surface of the housing.

In one or more embodiments, the magnetic alignment component may be embedded within the compliant and/or flexible cover.

In one or more embodiments, the compliant and/or flexible cover may comprise elastomer in which the magnetic alignment component is embedded.

In one or more embodiments, the magnetic alignment component may comprise a magnetic ring substantially concentric with the transmitting coil and located higher in the Z-axis than the transmitting coil.

In one or more embodiments, the wireless charging module may comprise a compliant and/or flexible cover positioned along the first surface of the housing.

In one or more embodiments, the magnetic ring may be embedded within the compliant and/or flexible cover.

In one or more embodiments, the magnetic alignment component may comprise a circular magnetic ring substantially concentric with the transmitting coil and located higher in the Z-axis than the transmitting coil.

In one or more embodiments, the housing may include a circular projection that extends upward from the first surface.

In one or more embodiments, the circular magnetic ring may be positioned in the circular projection of the housing.

In one or more embodiments, the transmitting coil may comprise an inductive charging coil within the housing.

In one or more embodiments, the inductive charging coil may be configured to be operable for transferring power wirelessly through the charging surface of the wireless charging module.

In one or more embodiments the magnetic alignment component may be located higher in the Z-axis than the inductive charging coil such that the magnetic alignment component is closer to the complementary magnetic alignment component of the mobile device when the mobile device is positioned on the charging surface of the wireless charging module, whereby the closer positioning of the magnetic alignment component and the complementary magnetic alignment component helps ensure that the magnetic alignment component and the complementary magnetic alignment component produce a sufficient magnetic force to pull the mobile device along the charging surface to properly align a receiving coil of the mobile device with the inductive charging coil.

In one or more embodiments, the magnetic alignment component may comprise a magnetic ring substantially concentric with the inductive charging coil and located higher in the Z-axis than the inductive charging coil.

In one or more embodiments, the wireless charging module may comprise a compliant and/or flexible cover positioned along the first surface of the housing.

In one or more embodiments, the magnetic ring may be embedded within the compliant and/or flexible cover.

In one or more embodiments, the compliant and/or flexible cover may comprise elastomer in which the magnetic ring is embedded.

In one or more embodiments, the magnetic alignment component may comprise a circular magnetic ring substantially concentric with the transmitting coil and located higher in the Z-axis than the transmitting coil.

In one or more embodiments, the housing may include a circular projection that extends upward from the first surface.

In one or more embodiments, the circular magnetic ring may be positioned in the circular projection of the housing.

In one or more embodiments, the magnetic alignment component may be a second magnetic alignment component that is positioned above the first surface of the housing of the wireless charging module such that the second magnetic alignment component is located higher in the Z axis than the transmitting coil.

In one or more embodiments, the wireless charging module may include a first magnetic alignment component within the housing, whereby the first and second magnetic alignment components are configured to magnetically couple with the complementary magnetic alignment component of the mobile device for aligning the mobile device on the charging surface of the wireless charging module.

In one or more embodiments, the first and second magnetic alignment components of the wireless charging module may be substantially concentric with the transmitting coil.

In one or more embodiments, the housing may include a projection that extends upward from the first surface of the housing.

In one or more embodiments, the second magnetic alignment component may be positioned in the projection of the housing.

In one or more embodiments, the wireless charging module may comprise a compliant and/or flexible cover positioned along the first surface of the housing.

In one or more embodiments, the second magnetic alignment component may be embedded within the compliant and/or flexible cover.

In one or more embodiments, the wireless charging module may comprises a magnetic shield disposed under the first magnetic alignment component; and a support structure within the housing, the support structure configured for supporting the transmitting coil, the first magnetic alignment component, and the magnetic shield disposed under the first magnetic alignment component.

Further areas of applicability will become apparent from the description provided herein. The description and specific examples in this summary are intended for purposes of illustration only and are not intended to limit the scope of the present disclosure.

### DRAWINGS

The present application is illustrated by way of example and not limited in the accompanying figures in which like reference numerals indicate similar elements and in which:
FIGS. 1 and 2 illustrate features of a prior art wireless charging system.

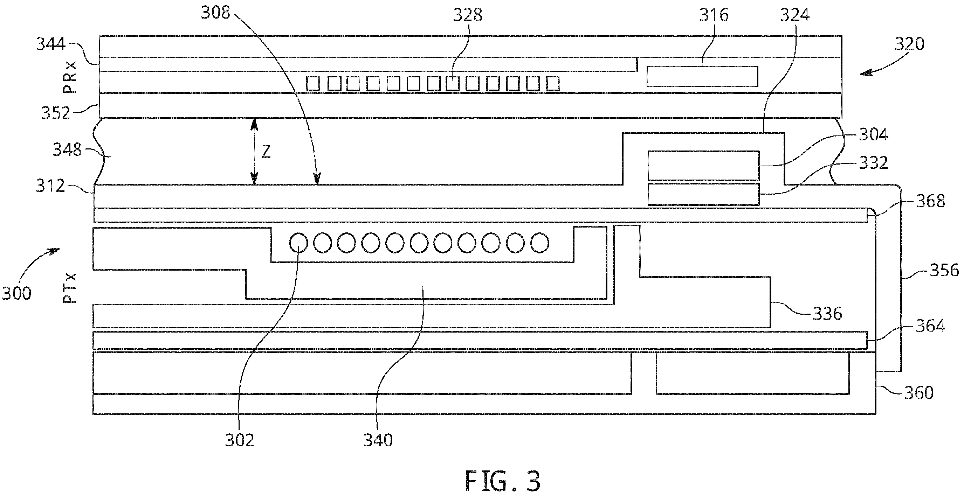

FIG. 3 is a partial cross-sectional view showing a mobile device positioned on a wireless charging module according to an exemplary embodiment of the present disclosure. The wireless charging module includes a magnetic alignment component (*e.g.,* a magnetic ring, *etc.)* within an upwardly extending projection of the housing such that the magnetic alignment component is located higher in the Z axis than the transmitting coil of the wireless charging module.

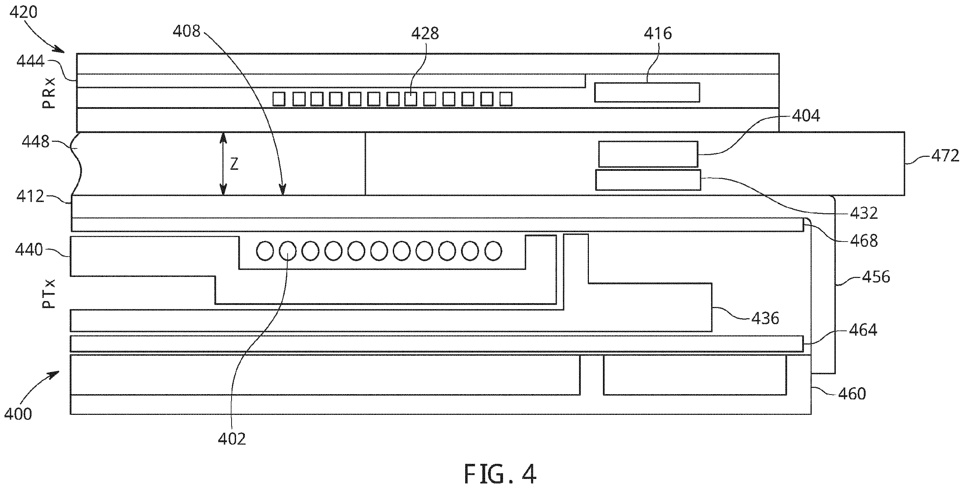

FIG. 4 is a partial cross-sectional view showing a mobile device positioned on a wireless charging module according to another exemplary embodiment of the present disclosure. The wireless charging module includes a magnetic alignment component (*e.g.,* a magnetic ring, *etc.)* within a compliant and/or flexible cover such that the magnetic alignment component is located higher in the Z axis than the transmitting coil of the wireless charging module.

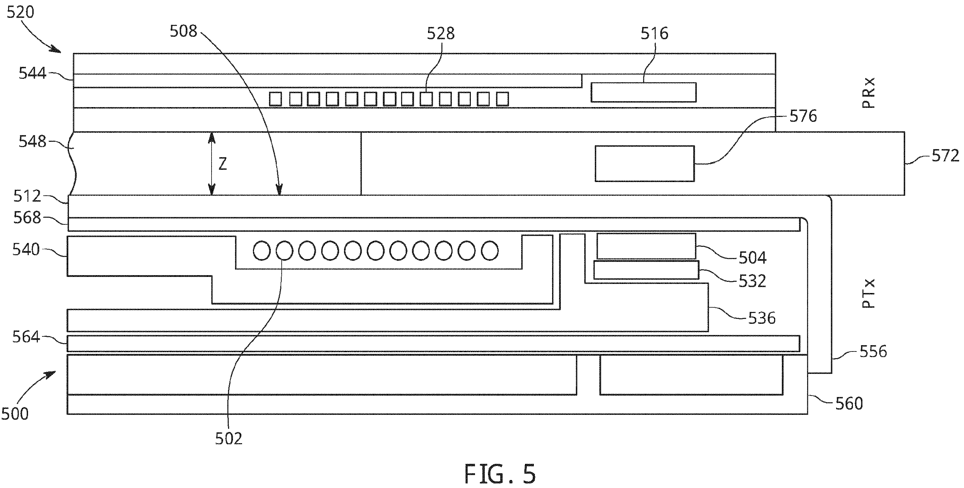

FIG. 5 is a partial cross-sectional view showing a mobile device positioned on a wireless charging module according to another exemplary embodiment of the present disclosure. The wireless charging module includes a secondary magnetic alignment component (*e.g.,* a magnetic ring for additional magnetic force, *etc.)* within a compliant and/or flexible cover such that the secondary magnetic alignment component is located higher in the Z axis than the transmitting coil of the wireless charging module.

### DETAILED DESCRIPTION

The detailed description that follows describes exemplary embodiments and the features disclosed are not intended to be limited to the expressly disclosed combination(s). Therefore, unless otherwise noted, features disclosed herein may be combined together to form additional combinations that were not otherwise shown for purposes of brevity.

A wireless charging module includes a transmitting coil, a magnetic alignment component *(e.g.,* a magnetic ring, *etc.),* an enclosure, and support features and circuitry to control the function of the components. The wireless charging module is configured to assist in ensuring a mobile device is placed on the charging surface of the wireless charging module in the proper location so as to ensure desirable alignment between the transmitting coil of the wireless charging module and the receiving coil of the mobile device. The magnetic alignment component of the wireless charging module includes one or more magnets (preferably one or more DC magnets), which may be formed in a ring that is generally around and/or substantially concentric with the transmitting coil of the wireless charging module. The magnets can be supported by a support frame of the wireless charging module. A magnetic shield *(e.g.,* ferrite, *etc.)* can also be provided on a bottom side of the transmitting coil.

A mobile device *(e.g.,* a receiver) may be placed on a first surface (which can be a top surface) of the wireless charging module, which includes a transmitting coil. The mobile device includes a receiver coil located inside of a magnetic ring that can be concentric with the receiver coil. The magnets of the wireless charging module and of the mobile device align themselves when the mobile device is positioned on the top surface of the wireless charging module such that the transmitter coil and the receiver coil are well aligned for an efficient power transfer.

One issue that occurs is that often the wireless charging module will include ribs or some thickness of a flexible/compliant material on its top surface, and the mobile device may also include a case. The combination of the various additional components can cause the magnetic force to be reduced such that the magnetic force is insufficient to properly assist in aligning the mobile device with the wireless charging module.

After recognizing the above, exemplary embodiments were developed and/or are disclosed herein in which the wireless charging module includes a magnetic alignment component (*e.g.,* magnetic ring, *etc.)* that is located higher in the Z axis than the transmitting coil. This enables the magnetic alignment component of the wireless charging module to be closer to the complementary magnetic alignment component of a mobile device positioned on a charging surface of the wireless charging module, which can provide better alignment between the wireless charging module's transmitter coil and the mobile device's receiver coil for an efficient power transfer. With the positioning of magnetic alignment component higher in the Z axis than the transmitting coil, the magnetic alignment component and the complementary magnetic alignment component of the mobile device will be close enough together when the mobile device is positioned on the charging surface of the wireless charging module to produce a sufficient magnetic force to pull the mobile device along the charging surface to properly align the mobile device's receiver coil device with the wireless charging module's transmitter coil without requiring use of stronger magnets.

FIG. 3 illustrates an exemplary embodiment of a wireless charging module 300 that includes a transmitting coil 302 and a magnetic alignment component 304 *(e.g.,* a DC magnetic ring, *etc.)* The magnetic alignment component 304 is located higher in the Z axis than the transmitting coil 302. The magnetic alignment component 304 may be substantially concentric with the transmitting coil 302.

As shown in FIG. 3, the magnetic alignment component 304 is positioned above the first surface 308 of the housing or enclosure 312 to reduce the distance to the complementary magnetic alignment component 316 *(e.g.,* DC receiver magnet(s), *etc.)* of the mobile device 320. The housing 312 includes a proj ection 324 that extends upward from the first surface 308 of the housing 312. And the magnetic alignment component 304 is positioned in the projection 324 of the housing 312.

In an exemplary embodiment, the magnetic alignment component 304 comprises a circular magnetic ring substantially concentric with the transmitting coil 302. The housing 312 includes a circular projection that extends upward from the first surface 308 of the housing 312. And the circular magnetic ring is positioned in the projection 324 of the housing 312, such that the circular magnetic ring is located higher in the Z-axis than the transmitting coil 302.

Positioning the magnetic alignment component 304 in the upwardly extending projection 324 of the housing 312 allows for a significant reduction in separation distance between the magnetic alignment component 304 of the wireless charging module 300 and the complementary magnetic alignment component 316 of the mobile device 320. This can help ensure that the magnetic alignment component 304 and the complementary magnetic alignment component 316 are sufficiently close enough together when the mobile device 320 is positioned on the charging surface of the wireless charging module 300 to produce a sufficient magnetic force to pull the mobile device 320 along the charging surface to properly align a receiving coil 328 of the mobile device 320 with the transmitting coil 302 of the wireless charging module 300, *e.g.,* without requiring use of stronger magnets.

The magnetic alignment component 304 is configured to magnetically couple with the complementary magnetic alignment component 316 *(e.g.,* annular DC magnet array, *etc.)* of a mobile device 320 for aligning the mobile device 320 on the charging surface of the wireless charging module 300. For example, the DC magnet(s) 304 of the wireless charging module 300 is preferably configured to magnetically couple with the DC magnet(s) 316 of the mobile device 320 for aligning the mobile device's Rx coil 328 with the Tx coil 302 of the wireless charging module 300 at a preferred or optimum charging location at which the mobile device 320 will receive maximum or optimum power from the wireless charging module 300.

The magnetic alignment component 304 may comprise an annular magnetic alignment component. The magnetic alignment component 304 may comprise an annular magnet array defining a full circular magnetic ring. Or the magnetic alignment component 304 may comprise an annular magnet array defining a partial circular ring including first and second spaced apart end portions such that a gap is defined between the first and second spaced apart end portions. The annular magnetic alignment component 304 may comprise one or more arcuate magnetic sections arranged in a full circular or partial circular annular configuration. Each arcuate magnet section may include inner and outer arcuate regions respectively having magnetic polarities oriented in opposite first and second axial directions. Each arcuate magnet section may include a central arcuate region disposed between the inner and outer arcuate regions that is not magnetically polarized.

The wireless charging module 300 also includes a magnetic shield 332 disposed under the magnetic alignment component 304 to shield the magnetic field in the downward direction. As shown in FIG. 3, the magnetic shield 332 is also positioned within the top housing. Alternatively, the magnetic shield 332 may be positioned on the support frame 336 where the magnetic ring and metallic ring are more customarily located.

The magnetic shield 332 may comprise an annular magnetic shield *(e.g.,* a metal ring, *etc.)* formed from one or more materials having a high magnetic permeability. The magnetic shield 332 is configured for redirecting magnetic fields to prevent the magnetic fields from propagating beyond the annular magnetic shield 332 to thereby protect sensitive electronic components located beyond the annular magnetic shield 332 from magnetic interference. By way of example, the magnetic shield 332 may comprise a metal component having a shape (*e.g.,* annular shape, ring shape, *etc.)* corresponding to the shape of the magnetic alignment component 304.

The wireless charging module 300 includes shielding 340 disposed under the transmitting coil 302. The shielding 340 is configured for providing protection against a magnetic field generated by the transmitting coil 302 while also supporting wireless charging and NFC frequency bands. The shielding 340 may comprise ferrite, such as Nickel Zinc (Ni-Zn) ferrite, Manganese Zinc (Mn-Zn) ferrite, *etc.* The mobile device 320 may also include shielding 344 that is configured to prevent the magnetic field from entering the mobile device 320 behind the charging Rx coil 328.

FIG. 4 also shows a layer 348 disposed between the bottom surface 352 mobile device 320 and the first surface 308 of the housing 312 of the wireless charging module 300. The layer 348 may comprise a covering or pad *(e.g.,* rubber, silicone elastomer, thermoplastic elastomer, *etc.)* on the housing 312, *e.g.,* that is configured to function as a cushion and/or friction pad for the mobile device 320, *etc.* Or the layer 348 may represent a case of the mobile device 320, an air gap, or a spaced vertical distance Z between the mobile device 320 and a charging surface of the housing 312 *(e.g.,* plastic, *etc.)* of the wireless charging module 300. The charging surface of the wireless charging module may comprise plastic, glass, silicone, or other material(s) permeable to AC and DC magnetic fields.

The housing or enclosure 312 of the wireless charging module 300 includes the top or upper portion 356 and a bottom or lower portion 360. The upper and lower portions 356, 360 of the housing 312 are configured to be coupled together such that an interior compartment is cooperatively defined between the upper and lower housing portions 356, 360. The bottom portion 360 may also be configured to support a main logic board 364 and a support structure 336 (*e.g.,* a plastic support frame, *etc.).* The support structure 336 may be configured for supporting the inductive charging coil 302 and shielding 340. The main logic board 364 may comprise an NFC module and control circuitry for controlling operation of the transmitting coil 302 in accordance with the Qi wireless charging protocol or other suitable protocol. The NFC module may be coupled with an NFC antenna of a printed circuit board (PCB) 368 or other NFC antenna within the wireless charging module 300.

FIG. 4 illustrates another exemplary embodiment of a wireless charging module 400 that includes a transmitting coil 402 and a magnetic alignment component 404 (*e.g.,* a DC magnetic ring, *etc*.) The magnetic alignment component 404 is located higher in the Z axis than the transmitting coil 402. The magnetic alignment component 404 may be substantially concentric with the transmitting coil 402.

As shown in FIG. 4, the magnetic alignment component 404 is positioned above the first surface 408 of the housing or enclosure 412 to reduce the distance to the complementary magnetic alignment component 416 (*e.g.,* DC receiver magnet(s), *etc*.) of the mobile device 420.

In this exemplary embodiment, the magnetic alignment component 304 is positioned (*e.g.,* embedded, integrated, *etc*.) within a compliant and/or flexible cover 472, which is positioned along the first surface 408 of the housing 412. The compliant and/or flexible cover 472 may comprise elastomer (*e.g.,* rubber, silicone elastomer, thermoplastic elastomer, *etc*.) in which the magnetic alignment component 404 is embedded.

Positioning (*e.g.,* embedding, integrating, *etc*.) the magnetic alignment component 404 in the compliant and/or flexible cover 472 allows for a significant reduction in separation distance between the magnetic alignment component 404 of the wireless charging module 400 and the complementary magnetic alignment component 416 of the mobile device 420. This can help ensure that the magnetic alignment component 404 and the complementary magnetic alignment component 416 are sufficiently close enough together when the mobile device 420 is positioned on the charging surface of the wireless charging module 400 to produce a sufficient magnetic force to pull the mobile device 420 along the charging surface to properly align a receiving coil 428 of the mobile device 420 with the transmitting coil 402 of the wireless charging module 400, *e.g.,* without requiring use of stronger magnets.

The wireless charging module 400 also includes a magnetic shield 432 (*e.g.,* metal ring, *etc*.) disposed under the magnetic alignment component 404 to shield the magnetic field in the downward direction. As shown in FIG. 4, the magnetic shield 432 is also positioned (*e.g.,* embedded, integrated, *etc*.) within the compliant and/or flexible cover 472. Alternatively, the magnetic shield 432 may be positioned on the support frame 436 where the magnetic ring and metallic ring are more customarily located.

The complaint and/or flexible cover 472 may be permanently placed on top of the first surface 408 of the housing 412. As can be appreciated, the compliant and/or flexible cover 472 can be provided with a low contour to keep the distance between the transmitting coil 402 and receiving coil 428 small. The compliant and/or flexible cover 472 may be fixed in a desired location so that the supported magnetic ring 404 is also in a desired location (for example, concentric with the transmitting coil 402). Hence, the magnetic ring 404 in the compliant and/or flexible cover 472 can help align the transmitting coil 402 with the receiving coil 428 while providing a stronger magnetic force that can more effectively align the transmitting coil 402 and receiver coil 428 in the desired orientation.

The illustrated components of the wireless charging module 400 may be substantially similar or identical to the corresponding components of the wireless charging module 300, although this is not required for all exemplary embodiments. For brevity, a detailed description of the magnetic alignment component 404, magnetic shield 432, support structure 436, shielding 440, layer 448, upper and lower housing portions 456 and 460, mainboard 464, and antenna board 468 of the wireless charging module 400 will therefore not be repeated.

Similarly, the mobile device 420 may be substantially similar or identical to the mobile device 320, although this is not required for all exemplary embodiments. For brevity, a detailed description of the DC magnet 412, receiver coil 428, and magnetic shield 444 of the mobile device 420 will therefore not be repeated.

If additional magnetic force is desired, the wireless charging module may include a secondary magnetic alignment component (*e.g.,* a magnetic ring, *etc*.) that is located higher in the Z axis than the transmitting coil of the wireless charging module. The wireless charging module also includes a magnetic alignment component (*e.g.,* a magnetic ring, *etc*.) and magnetic shielding (*e.g.,* metal shield, *etc*.) mounted on the support frame within the housing. The secondary magnetic alignment component may be positioned within an upwardly extending projection (*e.g.,* circular projection, *etc*.) of the housing. Or the secondary magnetic alignment component may be positioned (*e.g.,* embedded, integrated, *etc*.) within a compliant and/or flexible cover (*e.g.,* elastomer cover, *etc*.)*,* which is positioned along the first surface of the housing. In such exemplary embodiments, the additional magnetic force provided by the secondary or supplementary magnetic alignment component can help ensure proper alignment of the transmitting coil of the wireless charging module and the receiving coil of the mobile device when placed on the charging surface of the wireless charging module.

FIG. 5 illustrates another exemplary embodiment of a wireless charging module 500 that includes a transmitting coil 502, a first or primary magnetic alignment component 504 (*e.g.,* a DC magnetic ring, *etc*.), and a second or secondary magnetic alignment component 576 (*e.g.,* a DC magnetic ring for additional magnetic force, *etc*.). The secondary magnetic alignment component 576 is located higher in the Z axis than the transmitting coil 502. The secondary magnetic alignment component 576 may be substantially concentric with the transmitting coil 502.

As shown in FIG. 5, the first magnetic alignment component 504 and magnetic shield 432 are supported by the support frame 536 within the housing or enclosure 512. The second magnetic alignment component 576 is positioned above the first surface 508 of the housing or enclosure 512 to reduce the distance between the second magnetic alignment component 576 and the complementary magnetic alignment component 516 (*e.g.,* DC receiver magnet(s), *etc*.) of the mobile device 520.

In this exemplary embodiment, the second magnetic alignment component 576 is positioned (*e.g.,* embedded, integrated, *etc*.) within a compliant and/or flexible cover 572, which is positioned along the first surface 508 of the housing 512. The compliant and/or flexible cover 572 may comprise elastomer (*e.g.,* rubber, silicone elastomer, thermoplastic elastomer, *etc*.) in which the second magnetic alignment component 576 is embedded.

Positioning (*e.g.,* embedding, integrating, *etc*.) the second magnetic alignment component 576 in the compliant and/or flexible cover 572 allows for a significant reduction in separation distance between the second magnetic alignment component 576 of the wireless charging module 500 and the complementary magnetic alignment component 516 of the mobile device 520. This can help ensure that the second magnetic alignment component 576 and the complementary magnetic alignment component 516 are sufficiently close enough together when the mobile device 520 is positioned on the charging surface of the wireless charging module 500 to produce a sufficient magnetic force to pull the mobile device 520 along the charging surface to properly align a receiving coil 528 of the mobile device 520 with the transmitting coil 502 of the wireless charging module 500, *e.g.,* without requiring use of stronger magnets.

The magnetic alignment components 504 and 576 are configured to magnetically couple with the complementary magnetic alignment component 516 (*e.g.,* annular DC magnet array, *etc.*) of a mobile device 520 for aligning the mobile device 520 on the charging surface of the wireless charging module 500. For example, the DC magnet(s) 504, 576 of the wireless charging module 500 are preferably configured to magnetically couple with the DC magnet(s) 516 of the mobile device 520 for aligning the mobile device's Rx coil 528 with the Tx coil 502 of the wireless charging module 500 at a preferred or optimum charging location at which the mobile device 520 will receive maximum or optimum power from the wireless charging module 500.

The magnetic alignment components 504, 576 may comprise annular magnetic alignment components. The magnetic alignment component 504, 576 may comprise annular magnet arrays defining full circular magnetic rings. Or the magnetic alignment components 504, 576 may comprise annular magnet arrays defining partial circular rings including first and second spaced apart end portions such that a gap is defined between the first and second spaced apart end portions. The annular magnetic alignment components 504, 576 may comprise one or more arcuate magnetic sections arranged in a full circular or partial circular annular configuration. Each arcuate magnet section may include inner and outer arcuate regions respectively having magnetic polarities oriented in opposite first and second axial directions. Each arcuate magnet section may include a central arcuate region disposed between the inner and outer arcuate regions that is not magnetically polarized.

The illustrated components of the wireless charging module 500 may be substantially similar or identical to the corresponding components of the wireless charging module 300, although this is not required for all exemplary embodiments. For brevity, a detailed description of the magnetic alignment component 504, magnetic shield 532, support structure 536, shielding 540, layer 548, upper and lower housing portions 556 and 560, mainboard 564, and antenna board 568 of the wireless charging module 500 will therefore not be repeated.

Similarly, the mobile device 520 may be substantially similar or identical to the mobile device 320, although this is not required for all exemplary embodiments. For brevity, a detailed description of the DC magnet 512, receiver coil 528, and magnetic shield 544 of the mobile device 520 will therefore not be repeated.

Accordingly, exemplary embodiments of wireless charging modules are disclosed that comprise a housing that defines an enclosure, a transmitting coil within the housing, and a magnetic alignment component. The housing has a first surface that substantially defines a top side of the housing. The transmitting coil is configured to be operable for transferring power wirelessly through a charging surface of the wireless charging module. The magnetic alignment component is configured to magnetically couple with a complementary magnetic alignment component of a mobile device for aligning the mobile device on the charging surface of the wireless charging module. The magnetic alignment component of the wireless charging module is positioned above the first surface of the housing of the wireless charging module such that the magnetic alignment component of the wireless charging module is located higher in the Z axis than the transmitting coil.

In exemplary embodiments, the magnetic alignment component of the wireless charging module is substantially concentric with the transmitting coil.

In exemplary embodiments, the positioning of magnetic alignment component above the first surface of the housing and higher in the Z axis than the transmitting coil enables the magnetic alignment component to be closer to the complementary magnetic alignment component of the mobile device when the mobile device is positioned on the charging surface of the wireless charging module.

In exemplary embodiments, the positioning of magnetic alignment component above the first surface of the housing and higher in the Z axis than the transmitting coil helps ensure that the magnetic alignment component and the complementary magnetic alignment component of the mobile device are close enough together when the mobile device is positioned on the charging surface of the wireless charging module to produce a sufficient magnetic force to pull the mobile device along the charging surface to properly align a receiving coil of the mobile device with the transmitting coil without requiring use of stronger magnets.

In exemplary embodiments, the housing includes a projection (*e.g.,* a circular projection, *etc*.) that extends upward from the first surface of the housing. And the magnetic alignment component is positioned in the projection of the housing.

In exemplary embodiments, the wireless charging module includes a compliant and/or flexible cover (*e.g.,* elastomer cover, *etc*.) positioned along the first surface of the housing. And the magnetic alignment component is embedded within the compliant and/or flexible cover. The compliant and/or flexible cover may comprises elastomer (*e.g.,* rubber, silicone rubber, thermoplastic elastomer, *etc.*) in which the magnetic alignment component is embedded.

In exemplary embodiments, the magnetic alignment component comprises a magnetic ring substantially concentric with the transmitting coil and located higher in the Z-axis than the transmitting coil. The wireless charging module may comprise a compliant and/or flexible cover (*e.g.,* elastomer cover, *etc*.) positioned along the first surface of the housing. And the magnetic ring may be embedded within the compliant and/or flexible cover.

In exemplary embodiments, the magnetic alignment component comprises a circular magnetic ring substantially concentric with the transmitting coil and located higher in the Z-axis than the transmitting coil. The housing includes a circular projection that extends upward from the first surface. And the circular magnetic ring is positioned in the circular projection of the housing.

In exemplary embodiments, the transmitting coil comprises an inductive charging coil within the housing. The inductive charging coil is configured to be operable for transferring power wirelessly through the charging surface of the wireless charging module. And the magnetic alignment component is located higher in the Z-axis than the inductive charging coil such that the magnetic alignment component is closer to the complementary magnetic alignment component of the mobile device when the mobile device is positioned on the charging surface of the wireless charging module. The closer positioning of the magnetic alignment component and the complementary magnetic alignment component helps ensure that the magnetic alignment component and the complementary magnetic alignment component produce a sufficient magnetic force to pull the mobile device along the charging surface to properly align a receiving coil of the mobile device with the inductive charging coil.

In exemplary embodiments, the magnetic alignment component is a second or secondary magnetic alignment component that is positioned above the first surface of the housing of the wireless charging module such that the second or secondary magnetic alignment component is located higher in the Z axis than the transmitting coil. And the wireless charging module includes a first magnetic alignment component within the housing. The first and second magnetic alignment components are configured to magnetically couple with the complementary magnetic alignment component of the mobile device for aligning the mobile device on the charging surface of the wireless charging module.

In exemplary embodiments, the first and second magnetic alignment components of the wireless charging module may be substantially concentric with the transmitting coil.

In exemplary embodiments, the housing includes a projection that extends upward from the first surface of the housing. And the second or secondary magnetic alignment component is positioned in the projection of the housing.

In exemplary embodiments, the wireless charging module comprises a compliant and/or flexible cover (*e.g.,* elastomer cover, *etc*.) positioned along the first surface of the housing, And the second or secondary magnetic alignment component is embedded within the compliant and/or flexible cover.

In exemplary embodiments, a magnetic shield is disposed under the first magnetic alignment component. A support structure (*e.g.,* plastic support frame, *etc*.) is within the housing. The support structure is configured for supporting the transmitting coil, the first magnetic alignment component, and the magnetic shield disposed under the first magnetic alignment component.

The disclosure provided herein describes features in terms of preferred and exemplary embodiments thereof. Numerous other embodiments, modifications and variations within the scope and spirit of the appended claims will occur to persons of ordinary skill in the art from a review of this disclosure.

## Claims

1. A wireless charging module comprising:
a housing that defines an enclosure, the housing having a first surface that substantially defines a top side of the housing;
a transmitting coil within the housing, the transmitting coil configured to be operable for transferring power wirelessly through a charging surface of the wireless charging module; and
a magnetic alignment component configured to magnetically couple with a complementary magnetic alignment component of a mobile device for aligning the mobile device on the charging surface of the wireless charging module;
wherein the magnetic alignment component of the wireless charging module is positioned above the first surface of the housing of the wireless charging module such that the magnetic alignment component of the wireless charging module is located higher in the Z axis than the transmitting coil.

2. The wireless charging module of claim 1, wherein the magnetic alignment component of the wireless charging module is substantially concentric with the transmitting coil.

3. The wireless charging module of any one of the preceding claims, wherein the positioning of magnetic alignment component above the first surface of the housing and higher in the Z axis than the transmitting coil enables the magnetic alignment component to be closer to the complementary magnetic alignment component of the mobile device when the mobile device is positioned on the charging surface of the wireless charging module.

4. The wireless charging module of any one of the preceding claims, wherein the positioning of magnetic alignment component above the first surface of the housing and higher in the Z axis than the transmitting coil helps ensure that the magnetic alignment component and the complementary magnetic alignment component of the mobile device are close enough together when the mobile device is positioned on the charging surface of the wireless charging module to produce a sufficient magnetic force to pull the mobile device along the charging surface to properly align a receiving coil of the mobile device with the transmitting coil without requiring use of stronger magnets.

5. The wireless charging module of any one of the preceding claims, wherein:
the transmitting coil comprises an inductive charging coil within the housing, the inductive charging coil configured to be operable for transferring power wirelessly through the charging surface of the wireless charging module; and
the magnetic alignment component is located higher in the Z-axis than the inductive charging coil such that the magnetic alignment component is closer to the complementary magnetic alignment component of the mobile device when the mobile device is positioned on the charging surface of the wireless charging module, whereby the closer positioning of the magnetic alignment component and the complementary magnetic alignment component helps ensure that the magnetic alignment component and the complementary magnetic alignment component produce a sufficient magnetic force to pull the mobile device along the charging surface to properly align a receiving coil of the mobile device with the inductive charging coil

6. The wireless charging module of any one of the preceding claims, wherein:
the housing includes a projection that extends upward from the first surface of the housing; and
the magnetic alignment component is positioned in the projection of the housing.

7. The wireless charging module of any one of claims 1 to 5, wherein:
the wireless charging module comprises a compliant and/or flexible cover positioned along the first surface of the housing; and
the magnetic alignment component is embedded within the compliant and/or flexible cover.

8. The wireless charging module of claim 7, wherein the compliant and/or flexible cover comprises elastomer in which the magnetic alignment component is embedded such that the magnetic alignment component is located higher in the Z-axis than the transmitting coil.

9. The wireless charging module of any one of claims 1 to 5, wherein:
the wireless charging module comprises a compliant and/or flexible cover positioned along the first surface of the housing; and
the magnetic alignment component comprises a magnetic ring embedded within the compliant and/or flexible cover such that the magnetic ring is substantially concentric with the transmitting coil and located higher in the Z-axis than the transmitting coil.

10. The wireless charging module of any one of claims 1 to 5, wherein:
the housing includes a circular projection that extends upward from the first surface; and
the magnetic alignment component comprises a circular magnetic ring positioned in the circular projection of the housing such that the circular magnetic ring is substantially concentric with the transmitting coil and located higher in the Z-axis than the transmitting coil.

11. The wireless charging module of any one of the preceding claims, wherein:
the magnetic alignment component is a second magnetic alignment component that is positioned above the first surface of the housing of the wireless charging module such that the second magnetic alignment component is located higher in the Z axis than the transmitting coil; and
the wireless charging module includes a first magnetic alignment component within the housing;
whereby the first and second magnetic alignment components are configured to magnetically couple with the complementary magnetic alignment component of the mobile device for aligning the mobile device on the charging surface of the wireless charging module.

12. The wireless charging module of claim 11, wherein the first and second magnetic alignment components of the wireless charging module are substantially concentric with the transmitting coil.

13. The wireless charging module of claim 11 or 12, wherein:
the housing includes a projection that extends upward from the first surface of the housing; and
the second magnetic alignment component is positioned in the projection of the housing such that the second magnetic alignment component is located higher in the Z axis than the transmitting coil, whereby the second magnetic alignment component is closer to the complementary magnetic alignment component of the mobile device when the mobile device is positioned on the charging surface of the wireless charging module.

14. The wireless charging module of claim 11 or 12, wherein :
the wireless charging module comprises a compliant and/or flexible cover positioned along the first surface of the housing; and
the second magnetic alignment component is embedded within the compliant and/or flexible cover such that the second magnetic alignment component is located higher in the Z axis than the transmitting coil, whereby the second magnetic alignment component is closer to the complementary magnetic alignment component of the mobile device when the mobile device is positioned on the charging surface of the wireless charging module.

15. The wireless charging module of any one of claims 11 to 14, wherein the wireless charging module comprises:
a magnetic shield disposed under the first magnetic alignment component; and
a support structure within the housing, the support structure configured for supporting the transmitting coil, the first magnetic alignment component, and the magnetic shield disposed under the first magnetic alignment component.
